# EUROPEAN PATENT SPECIFICATION

(11) **EP 3 413 616 B1**
(45) Date of publication and mention of the grant of the patent: **13.01.2021**
(21) Application number: 17747604.1
(22) Date of filing: 03.02.2017
(51) Int. Cl.: H04W 28/06, H04W 72/04

(54) **USER EQUIPMENT, BASE STATION, CHANNEL IDENTIFYING METHOD, AND IDENTIFIER TRANSMITTING METHOD**
BENUTZERAUSRUSTUNG, BASISSTATION, KANALIDENTIFIKATIONSVERFAHREN UND IDENTIFIKATORUBERTRAGUNGSVERFAHREN
EQUIPEMENT D'UTILISATEUR, STATION DE BASE, PROCÉDÉ D'IDENTIFICATION DE CANAL, ET MÉTHODE DE TRANSMISSION D'IDENTIFIANT

(30) Priority: 04.02.2016 JP 2016020324
(43) Date of publication of application: 12.12.2018
(73) Proprietor: NTT DOCOMO, INC., Chiyoda-ku Tokyo 100-6150 (JP)
(72) Inventor: YASUKAWA, Shimpei, Tokyo 100-6150 (JP); TAKEDA, Kazuki, Tokyo 100-6150 (JP); NAGATA, Satoshi, Tokyo 100-6150 (JP)
(74) Representative: Hoffmann Eitle
(86) International application number: PCT/JP2017/004111
(87) International publication number: WO 2017/135453

(56) References cited:
- WO-A1-2013/127453
- WO-A1-2015/012032
- WO-A1-2015/012032
- WO-A1-2015/194014
- WO-A1-2015/194014
- NTT DOCOMO: "RNTI Handling in (E)PDCCH Coverage Enhancement", 3GPP TSG-RAN WG1#74 R1-133453, 10 August 2013 (2013-08-10), pages 1-7, XP050716561,
- NOKIA NETWORKS: "Alternative view on RNTI space extension", 3GPP TSG-RAN WG2#91bis R2-154101, 4 October 2015 (2015-10-04), XP051004709, Malmö, Sweden
- PANASONIC: "D2D grant design in mode 1 resource allocation", 3GPP TSG-RAN WG1#77 R1-142189, 18 May 2014 (2014-05-18), pages 1-3, XP050787785, Seoul, Korea

## Description

### TECHNICAL FIELD

The present invention relates to a method of giving a notification of an identifier used for identifying a channel and a user in a radio communication system.

### BACKGROUND ART

In a radio communication system compliant with LTE, an identifier called a radio network temporary identifier (RNTI) is used. The RNTI is an identifier used for identifying a channel. In addition, the RNTI is also an identifier used for identifying a user. In Non-Patent Document 1 (7.1 RNTI values), it is illustrated that the type is determined based on the value of an RNTI or the range of the value, and a transport channel and a logical channel are associated according to the type.

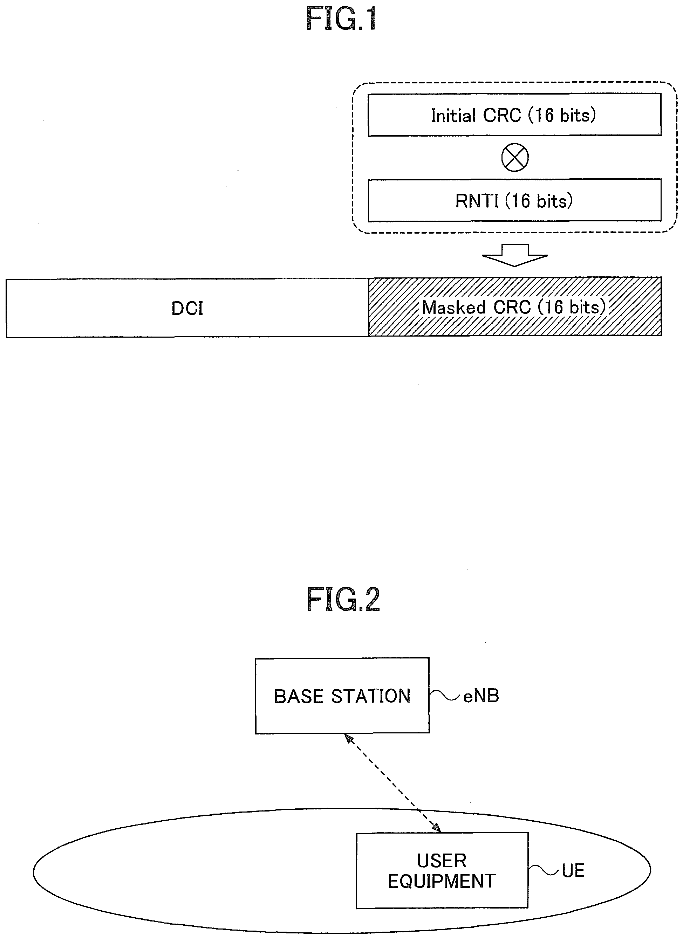

However, except for the distribution of the RNTI, the RNTI is not explicitly notified from a base station eNB (hereinafter, referred to as an eNB) to a user equipment UE (hereinafter referred to as a UE). As illustrated in Fig. 1, the eNB scrambles a cyclic redundancy check (CRC; a value for a test) given to a payload of downlink control information (DCI) transmitted in a physical downlink control channel (PDCCH) by using the RNTI. The UE that has received the PDCCH performs blind decoding in a predetermined search space by using the RNTI that the UE has, thereby acquiring a DCI. For example, in a case where a DCI can be acquired using a P-RNTI, the UE can identify that a paging channel is received.

WO 2015/012032 A1 describes a base station for transmitting, to a terminal device, control information containing an error detection code, in which masking is applied to predetermined identification information, in a wireless communication system. The base station has a generation means for generating a second set of information which matches the length of the predetermined identification information when the length of a first set of information, which is masked by the predetermined identification information in order to generate the error detection code, does not match the length of the predetermined identification information, and an error detection code generation means for generating an error detection code in which the second set of information is masked by the predetermined identification information when the second set of information was generated.

WO 2015/194014 A1 describes a first wireless device that wirelessly communicates with a wireless base station, transmits identifying information for said first wireless device using a wireless resource that is allocated for device-to-device communication between second wireless devices that does not go through the wireless base station.

### CITATION LIST

### NON-PATENT DOCUMENT

Non-Patent Document 1: 3GPP TS 36.321 V12. 6.0 (2015-06)

### DISCLOSURE OF THE INVENTION

### PROBLEM TO BE SOLVED BY THE INVENTION

In the future, it is predicted that machine-type communication (MTC) will be widely used, and the number of terminals (UEs) connected to a network will be rapidly increased. In such a case, there is a possibility that the namespace of existing RNTIs becomes insufficient.

In the current LTE specification, the number of C-RNTIs set by each UE is 65,462. However, as disclosed in Non-Patent Document 1, C-RNTIs use the same namespace as that of RNTIs used for semi-persistent scheduling (SPS) or transmit power control (TPC), and accordingly, an effectively usable area is further decreased.

In order to resolve the insufficiency of the namespace, the length of RNTIs may be considered to be expanded. However, according to the expansion of the length of RNTIs, the signaling overhead increases. An increase in the signaling overhead may cause coverage regeneration of UEs, an increase in the battery consumption of UEs, and the like, which is not preferable.

The invention has been made in view of the points described above, and an object thereof is to provide a technology enabling suppression of an increase in the overhead also in a case where identifiers used for identifying channels are expanded in a radio communication system.

### MEANS FOR SOLVING PROBLEM

According to the present invention, there is provided a user equipment as set out in Claim 1.

According to the present invention, there is also provided a base station as set out in Claim 8.

According to the present invention, there is also provided a channel identifying method performed by a user equipment as set out in Claim 9.

According to the present invention, there is also provided an identifier transmitting method performed by a base station as set out in Claim 10.

### EFFECT OF THE INVENTION

A technology enabling suppression of an increase in the overhead also in a case where identifiers used for identifying channels are expanded in a radio communication system is provided.

### BRIEF DESCRIPTION OF DRAWINGS

Fig. 1 is a diagram that illustrates a conventional RNTI.
Fig. 2 is a diagram that illustrates the configuration of a communication system according to an embodiment of the invention.
Fig. 3 is a diagram that illustrates an example of an RNTI of a size larger than 16 bits.
Fig. 4 is a diagram that illustrates an overview of an embodiment.
Fig. 5 is a diagram that illustrates an example of an identification operation performed by a user equipment UE.
Fig. 6 is a sequence diagram that illustrates Processing Example 1 in which a long/normal-RNTI is set according to the capability.
Fig. 7 is a sequence diagram that illustrates Processing Example 2 in which a long/normal-RNTI is set according to the capability.
Fig. 8 is a diagram that illustrates an example in which time and frequency resources that can be allocated as resources by an RNTI are limited.
Fig. 9 is a diagram that illustrates an example of the sequence according to a modified example.
Fig. 10 is a diagram that illustrates the configuration of a user equipment UE.
Fig. 11 is a diagram that illustrates the hardware configuration of a user equipment UE.
Fig. 12 is a diagram that illustrates the configuration of a base station eNB.
Fig. 13 is a diagram that illustrates the hardware configuration of a base station eNB.

### MODE (S) FOR CARRYING OUT THE INVENTION

There is disclosed herein a user equipment that communicates with a base station in a radio communication system including the base station and the user equipment which includes: an acquisition unit that acquires downlink control information from a downlink control channel by using a part of an identifier used for identifying a channel and acquires a remaining part acquired by excluding the part from the identifier from a predetermined resource; and an identification unit that identifies the channel by using the identifier configured by the part and the remaining part acquired by the acquisition unit.

In addition, there is disclosed herein a base station communicating with a user equipment in a radio communication system including the base station and the user equipment which includes: an identifier processing unit that masks a value for a test of downlink control information by using a part of an identifier used for identifying a channel; and a transmitting unit that transmits the downlink control information to which the masked value for the test is added in a downlink control channel, wherein the transmitting unit transmits a remaining part acquired by excluding the part from the identifier by a predetermined resource.

Furthermore, there is disclosed herein a channel identifying method performed by a user equipment that communicates with a base station in a radio communication system including the base station and the user equipment which includes: acquiring downlink control information from a downlink control channel by using a part of an identifier used for identifying a channel and acquires a remaining part acquired by excluding the part from the identifier from a predetermined resource; and identifying the channel by using the identifier configured by the part and the remaining part acquired in the acquiring of downlink control information.

In addition, there is disclosed herein an identifier transmitting method performed by a base station communicating with a user equipment in a radio communication system including the base station and the user equipment which includes: masking a value for a test of downlink control information by using a part of an identifier used for identifying a channel; transmitting the downlink control information to which the masked value for the test is added in a downlink control channel; and transmitting a remaining art acquired by excluding the part from the identifier by a predetermined resource.

Hereinafter, an embodiment of the invention will be described with reference to the drawings. The embodiment described below is merely an example, and an embodiment to which the invention is applied is not limited to the embodiment described below. For example, while a mobile communication system according to this embodiment is assumed to be an LTE-compliant system, the invention is not limited to the LTE system but may be applied to any other system. In the present specification and claims, "LTE" is used in a broad meaning including a communication system (including 5G) corresponding to Rel-12, 13, 14 of 3GPP or thereafter. In addition, an RNTI described below is an example of an identifier identifying a channel, and the invention can also be applied to an identifier other than the RNTI.

### (System Configuration and Overview of Operation)

Fig. 2 is a diagram that illustrates the whole configuration of a radio communication (mobile communication) system according to an embodiment of the invention. The radio communication system according to this embodiment includes: a base station eNB that forms a cell; and a user equipment UE (hereinafter, referred to as a UE) that communicates with the base station eNB (hereinafter, referred to as an eNB).

Each of the eNB and the UE has at least an LTE function. In other words, the eNB scrambles a CRC given to the payload of a DCI transmitted in a PDCCH by using an RNTI and transmits the PDCCH. The UE that has received the PDCCH performs blind decoding in a predetermined search space by using the RNTI that the UE has, thereby acquiring a DCI. Thereafter, the UE performs a channel receiving process according to the type (the value of the RNTI) of the RNTI used for the acquisition of the DCI and the like.

In this embodiment, the RNTI is expanded, and the eNB and the UE can use a value larger (a value smaller) than 16 bits as the RNTI. For example, the eNB issues the expanded RNTI to the UE and transmits DCI (downlink control information) including a CRC masked using the expanded RNTI by the PDCCH.

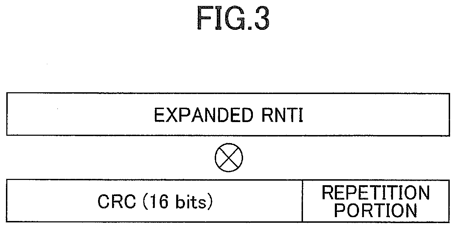

For example, as illustrated in Fig. 3, when the CRC is masked using the expanded RNTI, the eNB connects a start portion or an end portion of the CRC to the original CRC as a repetition portion, thereby configuring "the CRC + the repetition portion" to have the same length as the expanded RNTI. Then, the eNB masks "the CRC + the repetition portion" by using the expanded RNTI.

The UE using the expanded RNTI extracts a CRC from "the CRC + the repetition portion" that is descrambled by using the expanded RNTI and performs CRC check for the extracted CRC, thereby acquiring target DCI.

As a method for arranging the lengths of the expanded RNTI and the CRC to be uniform, the method of using the repetition portion as described above is an example. For example, a CRC generating polynomial generating a CRC having a length of the expanded RNTI may be used. In addition, the lengths of the expanded RNTI and the CRC may be not arranged to be uniform. As will be described later in detail, CRC masking may be performed using a portion of the expanded RNTI that corresponds to the length of the existing RNTI.

In this embodiment, all the UEs may use a common RNTI length, or a RNTI length for use may be changed for each UE. For example, the eNB may determine the length of the RNTI in accordance with the capability (for example, a capability corresponding to MTC or not) of a UE and, for the UE, issues the RNTI of the determined length and uses the RNTI for a CRC mask and the like. In addition, the UE uses the RNTI.

In addition, an RNTI length to be used may be changed according to a DCI format to be transmitted. For example, the eNB uses a short RNTI length in the case of transmission of a DCI format 1C and uses a long RNTI in the case of a DCI format 2.

As described above, for each UE, by configuring the RNTI length to be changeable for each DCI, a short RNTI length can be used for some UEs or a part of DCIs, and the influence of an increase in the overhead according to the expansion of the RNTI length can be suppressed.

### (Specific Example of Embodiment)

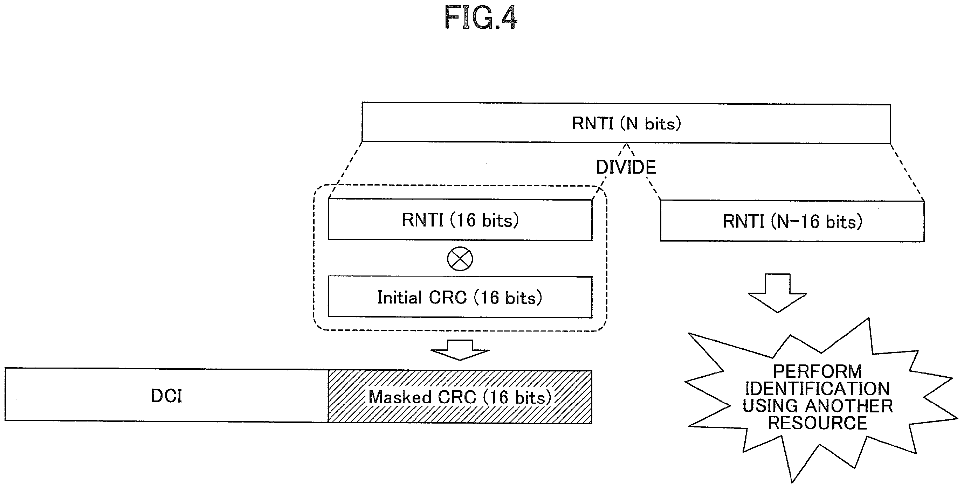

Hereinafter, this embodiment will be described more specifically. In an example described below, as illustrated in Fig. 4, in a case where an expanded RNTI longer than an existing RNTI is used, the eNB performs masking of a CRC by using a part (the length of an existing CRC) of the expanded RNTI and transmits DCI to which the CRS is attached by the PDCCH. Also, the eNB transmits a remaining part (a remaining part of the expanded RNTI) of the expanded RNTI by using another resource other than the CRC part. The another resource, for example, is one used for a purpose other than the notification of the RNTI, and, accordingly, the overhead relating to the expansion of the RNTI can be decreased.

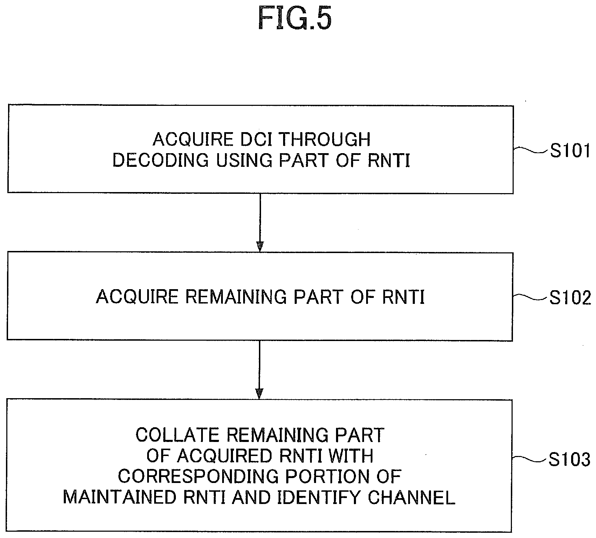

For example, the eNB transmits the remaining part of the expanded RNTI as a part of a field of a DCI to which a CRC masked using a part (a part other than the remaining part; hereinafter, the same) of the expanded RNTI is attached. In this case, an example of an identifying operation of the UE that has received the PDCCH will be described with reference to Fig. 5.

In Step S101, the UE acquires DCI by a blind decoding process using a part of an expanded RNTI that the UE has. In Step S102, the UE acquires a remaining part (information corresponding thereto) of the expanded RNTI from a predetermined field of the DCI. In Step S103, the UE compares the acquired remaining part of the expanded RNTI with a corresponding part of the expanded RNTI that the UE has, and, in the case where they are the same, the UE perceives reception of a channel (PDSCH) addressed to the UE relating to the received DCI and can identify the type (a type corresponding to the expanded RNTI) of a channel (for example, a transport channel, a logical channel, or the like). For example, in a case where DCI can be acquired using a holding C-RNTI (expanded one), the UE can identify that the received transport channel is a DL-SCH addressed thereto.

In addition, as a method of transmitting the remaining part of the expanded RNTI using another resource, for example, the eNB transmits the remaining part of the expanded RNTI by using any one of a beam index, a time and frequency resource, and a code used for the transmission of the DCI or a combination of a plurality thereof (including all). The eNB according to this embodiment has a beam forming function for forming a plurality of beams.

For example, in a case where a beam index is used, in a case where the remaining part of the expanded RNTI is "15", the eNB transmits DCI (PDCCH) to which a CRC masked by using a part of the expanded RNTI is attached in a downlink beam identified as a number "15". In this case, the UE knows a resource for each downlink beam in advance and acquires DCI by using a part of the expanded RNTI from the PDCCH received using a resource corresponding to the number "15". Then, the UE compares "15" with a corresponding portion of the holding expanded RNTI and, in the case of coincidence of "15", the UE perceives the reception of a channel addressed thereto relating to the received DCI.

In addition, for example, as the time and frequency resource described above, a search space of the PDCCH or a subset thereof may be used. For example, a predetermined search space is divided into a plurality of areas, and the divided areas and values of the remaining part of the expanded RNTI are associated with each other. The UE perceives a value of the remaining part of the expanded RNTI notified from the eNB based on an area from which DCI to which the CRC masked using a part of the expanded RNTI is attached can be acquired.

Also, the eNB may notify the UE of the remaining part of the expanded RNTI by using both of or any one of a time and frequency resource and a sequence of a reference signal used for demodulation of the PDCCH. For example, a time and frequency resource of a reference signal is associated with a value of the remaining part of the expanded RNTI, and the UE maintains the corresponding information using broadcast information or the like. Then, in a case where DCI to which a CRC masked using a part of the expanded RNTI is attached can be acquired, the UE acquires a value of the remaining part of the expanded RNTI from the time and frequency resource of the reference signal used for demodulating the PDCCH based on the correspondence information described above.

In addition, the eNB may notify the UE of the remaining part of the expanded RNTI by using a higher layer identifier such as a MAC header or the like. In a case where the MAC header is used, the UE, first, acquires DCI to which a CRC masked using a part of the expanded RNTI is attached, thereafter, receives a PDSCH by using the DCI, acquires a MAC header from the data of the PDSCH, and performs comparison of the remaining part of the expanded RNTI.

In addition, the eNB may notify the UE of the remaining part of the expanded RNTI by using information identifying numerology. In this embodiment, the numerology is an example of the "resource". The numerology, for example, is a parameter used in a radio communication system such as a subframe length, a slot length, a subcarrier interval, a symbol length, a sampling frequency, an FFT size, the number of subcarriers, a CP length, or the like.

For example, a value of specific numerology (for example: the CP length) is associated with a value of the remaining part of the expanded RNTI, and the UE maintains the corresponding information using broadcast information or the like. Then, in a case where DCI to which a CRC masked by using a part of the expanded RNTI is attached can be acquired, the UE acquires a value of the remaining part of the expanded RNTI based on the corresponding information described above from the value of the numerology used at the time of demodulation of the PDCCH.

In addition, the eNB may notify the UE of the remaining part of the expanded RNTI by using a resource pool identifier. In such a case, for example, the eNB notifies the UE of an identifier of a resource pool (for example, the range of the time and frequency resource or the like) used by the UE for signal reception (or signal transmission) by using broadcast information or the like. Also, the eNB notifies the UE of correspondence information between a resource pool identifier and a value of the remaining part of the expanded RNTI. In a case where DCI to which a CRC masked using a part of the expanded RNTI is attached can be acquired, the UE acquires a value of the remaining part of the expanded RNTI from the identifier of the resource pool and performs comparison.

The eNB may change the RNTI size (division ratio) used for CRC masking in accordance with a DCI format. Furthermore, for example, at the time of transmitting DCI for a specific UE (for example, an MTC-UE), by decreasing the size of the CRC mask (for example, eight bits) and notifying of the remaining RNTI, for example, by using a time resource (for example, a time set to be described later or the like), the overhead may be decreased.

### <Regarding Expanded Identifier>

A part of the expanded RNTI described above may be set as an existing RNTI, and the remaining part of the expanded RNTI may be positioned as an expansion identifier for expanding the existing RNTI. Also in a case where the remaining part of the expanded RNTI is configured as the expansion identifier, the operation is the same as that of the example described above.

As an example of a case where the expansion identifier is notified by using a time resource, for example, a time set causing the RNTI (existing RNTI) to be effective is configured to the UE from the eNB by using higher layer signaling. Alternatively, the time set is preconfigured in the UE.

For example, it is assumed that a UE-A is configured such that an RNTI is effective in a time set A, and a UE-B is configured such that an RNTI is effective in a time set B that is orthogonal to the time set A. In such a case, the eNB allocates the same RNTI to the UE-A and the UE-B. Meanwhile, the UE-A monitors a DCI by using the RNTI in the time set A, and the UE-B monitors a DCI by using the RNTI in the time set B.

While the example described above is an example in which expansion identifiers are discrimination of time resources, instead of time resources or in addition to time resources, discrimination of frequency resources may be used as expansion identifiers.

In addition, by providing a time window that is effective for a predetermined period triggered upon assignment of resources from the eNB to the UE or transmission of a specific control signal from the eNB to the UE, burst transmission and reception of data may be configured to be performed.

Furthermore, the expansion identifier may be associated with a DCI format. In such a case, only a UE in which the expansion identifier is configured monitors a specific DCI format including the expansion identifier (or corresponds to an expansion identifier). Similarly, as to the MAC header, only a UE in which an expansion identifier is configured may monitor only a MAC header of a type capable of notification of the expansion identifier.

A part (a range of a part inside a space) of an RNTI (a normal-RNTI to be described later) of an existing length may be reserved for RNTI expansion. Accordingly, a UE that can recognize RNTI expansion and a UE that cannot recognize RNTI expansion can be operated together.

### (Specific Example of Case Where Expanded RNTI Is Applied to Part of UEs)

As described above, in this embodiment, an expanded RNTI can be applied to some UEs as targets. A specific example of such a case will be described as below.

In a radio communication system according to this embodiment, a long-RNTI (long RNTI) and a normal-RNTI (normal RNTI) are defined. The long-RNTI corresponds to an expanded RNTI described until now, and a normal-RNTI corresponds to an existing RNTI.

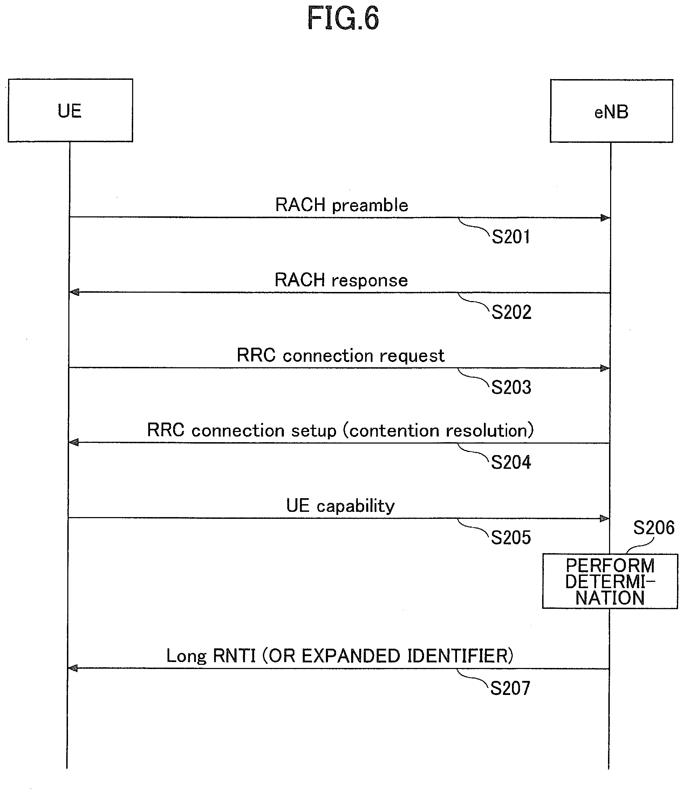

For example, the eNB, in a random access procedure, issues a normal-RNTI to a UE and issues a long-RNTI to the UE in accordance with the capability of the UE or the category of the UE by using a higher layer signaling. The processing sequence of this case will be described with reference to Fig. 6. As an example, Fig. 6 illustrates an example of a contention based random access sequence. Here, the random access is performed in a case where the UE establishes a connection with the eNB when call origination or handover or the like, and a main object thereof is to establish uplink synchronization.

In Step S201, the UE transmits a RACH preamble (selected preamble sequence) using a physical random access channel (PRACH) by using one preamble sequence among a preamble sequences of a predetermined number.

In Step S202, the eNB transmits a RACH response including an issued normal-RNTI (temporary C-RNTI) to the UE by using a DL-SCH (downlink shared channel).

The UE that has received the RACH response transmits a control message such as an RRC connection request to the eNB using an UL-SCH (uplink shared channel) by using a resource allocated by an UL grant included in the RACH response (Step S203).

In Step S204, the eNB transmits a contention resolution (contention resolution message) using the DL-SCH. The UE that has received the contention resolution checks that its own normal-RNTI is included, thereby completing the random access process and thereafter, can transmit/receive data by using the normal-RNTI.

In this embodiment, for example, in Step S205, capability information (UE capability) of the UE is transmitted to the eNB. In this transmission, a normal-RNTI is used. The eNB determines whether to issue a long-RNTI to the UE based on the capability information (for example, a UE category, a UE type, or the like) (Step S206). Here, for example, the eNB determines that the UE has capability information corresponding to an MTC terminal and issues a long-RNTI, thereby transmitting the long-RNTI to the UE by using an RRC message, a broadcast signal, or a physical signal (Step S207). Thereafter, the UE performs monitoring of DCI by using the long-RNTI and the like.

The information transmitted here may be the long-RNTI or be an expansion identifier that forms the long-RNTI together with a normal-RNTI. For example, the UE (and the eNB) uses "normal-RNTI + expansion identifier" as the long-RNTI.

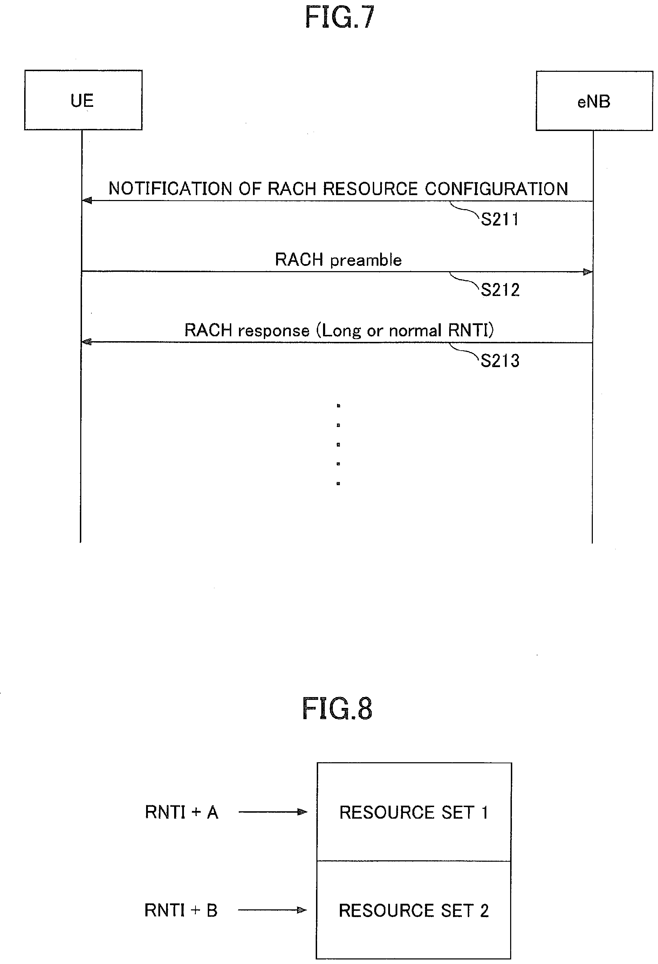

Another example of the sequence of issuing a long-RNTI will be described with reference to Fig. 7. In Step S211, the eNB notifies the UE of correspondence information between configuration information of a resource used for transmitting a RACH preamble and the UE capability information or the UE type (hereinafter, these will be collectively referred to as a UE capability) by using a broadcast signal (or higher layer signaling). The configuration information, for example, is formed by one of a time resource, a frequency resource, and a preamble sequence or a combination of two thereof, or a combination of three thereof.

The UE transmits a RACH preamble by using the configuration information corresponding to its own UE capability based on the correspondence information described above (Step S212). The eNB determines an RNTI (a long-RNTI or a normal-RNTI) to be issued to the UE based on the configuration information (resource) of the received RACH preamble and transmits a RACH response including the determined RNTI (a long-RNTI or a normal-RNTI) to the UE (Step S213).

In addition, it may be configured such that the correspondence information between a window for monitoring the RACH response and the UE capability is notified from the eNB to the UE, and the eNB, in the transmission of a RACH response, transmits a RACH response including a long-RNTI within the window of the UE capability corresponding to the long-RNTI and transmits a RACH response including a normal-RNTI within the window of the UE capability corresponding to the normal-RNTI, and the UE receives the RACH response by monitoring the window corresponding to its own UE capability based on the correspondence information described above. In such a case, the transmission resource of the RACH preamble can be configured to be common to UEs.

Furthermore, it may be configured such that correspondence information between the format (an RNTI or a DCI format used for the transmission) of the RACH response and the UE capability is notified from the eNB to the UE, and the eNB, in the transmission of a RACH response, transmits a RACH response including a long-RNTI in a format corresponding to the long-RNTI and transmits a RACH response including a normal-RNTI in a format corresponding to the normal-RNTI, and the UE receives a RACH response by monitoring a format corresponding to its own UE capability based on the correspondence information described above. Also in such a case, a transmission resource of RACH preambles can be configured to be common to UEs.

The UE that has set the long-RNTI using any one method among the methods described above, detects DCI by using a part of the long-RNTI as a normal-RNTI and identifies a remaining part of the remaining long-RNTI by using another resource, for example, by using the method (Fig. 4) described above. This remaining part may be the expansion identifier described above.

In addition, the eNB may be configured to use a search space corresponding to the long-RNTI and/or a DCI format corresponding to the long-RNTI. In such a case, the eNB notifies the UE of information of the search space corresponding to the long-RNTI and/or information of the DCI format corresponding to the long-RNTI by using a broadcast signal or the like. Then, the UE detects DCI that is CRC-masked using the long-RNTI, by monitoring, by using a long-RNTI that the UE has, a search space corresponding to the long-RNTI and/or a DCI format corresponding to the long-RNTI.

When a normal-RNTI or a long-RNTI is issued by the eNB to the UE using a RACH response, as RNTI used for the transmission of the RACH response, for example, out of two types (for a normal-RNTI and for a long-RNTI) having an RNTI length of the normal-RNTI, an RNTI corresponding to the issued RNTI is used. It may be configured such that an RNTI having the RNTI length of the normal-RNTI is used so as to issue a normal-RNTI, and an RNTI having the RNTI length of the long-RNTI is used so as to issue a long-RNTI. By configuring as such, the UE can identify the type of the issued RNTI by using the RNTI used for the reception of the RACH response.

### (Regarding Restriction of Time and Frequency Resources That Can Be Allocated as Resources)

In this embodiment, the time and frequency resources that can be allocated as resources may be restricted by using RNTI.

For example, in a case where the RNTI is expanded using an expansion identifier, as illustrated in Fig. 8, for a UE to which an expanded RNTI, to which A is attached as the expansion identifier, is allocated, the eNB allocates resources (for example, a DL data transmission resource, a UL data transmission resource, and the like) within a resource set 1. In addition, for a UE to which an expanded RNTI, to which B is attached as the expansion identifier, is allocated, the eNB allocates resources within a resource set 2.

Since each UE perceives a resource set having a possibility of allocation of resources by the allocated expansion identifier (expanded RNTI), the eNB can cause the information amount for resource allocation to be a small information amount (the amount of information used for identifying resources within a resource set). Accordingly, signaling overhead for the resource allocation can be decreased.

### (Regarding Generation of RNTI)

In this embodiment, instead of issuing the RNTI from the eNB to the UE, the UE may generate RNTI using a predetermined rule based on a UE-ID (for example, an international mobile subscriber identity (IMSI) stored in a SIM card) and use the generated RNTI. In addition, at the time of network connection of the UE or the like, since the eNB acquires a UE-ID from the UE, the eNB generates RNTI using the same rule as that of the UE and uses the generated RNTI.

The RNTI described above may be the expanded RNTI (long-RNTI) described until now. In addition, a method of using the RNTI, for example, is similar to the method described with reference to Fig. 4 and the like. The process of conversion from a UE-ID to RNTI in the UE may be performed by the UE in a case where a conversion instruction is received from the eNB by using a broadcast signal. In addition, a conversion method (conversion equation) may be designated by using a broadcast signal. Furthermore, based on the broadcast signal, the UE may generate RNTI from information acquired by excluding a country code or a company code from the UE-ID.

In this way, by generating the RNTI from the UE-ID, the overhead for issuing the RNTI can be decreased.

When the UE transmits a UE-ID to the eNB, by transmitting the UE-ID after hashing instead of directly transmitting the UE-ID, the privacy can be protected. Furthermore, the UE-ID may be configured to be expanded to a length equal to or greater than the RNTI length. For example, expansion of the IMSI from 32 bits to 128 bits or the like may be performed. In such a case, multi-terminal connection in the higher layer can be supported.

Also, by expanding the UE-ID (generated from the IMSI) notified through paging to be larger than 1024 or by setting a plurality of time and frequency resource sets of the paging monitor and changing a UE-ID set to be notified for each set, an implicit notification of a part of UE-IDs may be performed.

### (Regarding Handling of Plurality of RNTI Lengths Different from Each Other)

The RNTI is not only used for a mask of CRC but also used for generation of a scramble code of a predetermined channel, generation of a sequence of reference signals (RS), and the like. Regarding the RNTI used for such purposes, the need for defining an equation for the generation of a scramble code or the generation of a sequence of reference signals for each of a plurality of RNTI lengths different from each other is low.

Thus, in this embodiment, as described until now, also in a case where a plurality of RNTIs having mutually-different lengths are used, as values of the RNTIs used for a purpose other than a CRC mask, an RNTI value (this will be referred to as logical RNTI value) common to the plurality of RNTIs having mutually-different lengths are introduced.

As the logical RNTI value, a common portion of the plurality of RNTIs having mutually-different lengths can be used. Here, the common portion, for example, is a normal-RNTI in a case where "the normal-RNTI + the expansion identifier" is used as a long-RNTI. In addition, as the logical RNTI value, a value acquired by performing zero-padding for RNTI having shorter size to be a length (size) of the RNTI having the maximum length may be used. In other words, each of the UE and the eNB generates a logical RNTI value from the RNTIs having a plurality of mutually-different lengths and uses the generated RNTI value for the generation of a scramble code or the generation of a sequence of reference signals.

In addition, instead of introducing the logical RNTI value as described above, identifiers used for identifying RNTIs having mutually-different sizes may be assigned to a generation equation used for generating a scrambling code or an RS generation sequence of each channel so as to generate scrambling codes or the like corresponding to the RNTIs. In this way, also in an environment in which RNTI formats different from each other are present together, a different scrambling RS can be applied to each UE.

### (Modified Example)

It may be configured such that a same RNTI is issued from the eNB to a plurality of UEs, and each UE to which the same RNTI is issued performs DCI monitoring using the RNTI in accordance with an instruction from the eNB. More specifically, the eNB instructs each UE to which the same RNTI is assigned of activation/de-activation of the DCI monitoring using the RNTI. Each UE that has received a control signal of the activation performs the DCI monitoring, and each UE that has received a control signal of the deactivation does not perform the DCI monitoring.

For example, the eNB may transmit the activation/de-activation control signals using a common search space or may set another group search space that is monitored by UEs sharing the RNTI and transmit the activation/de-activation control signals through higher layer signaling by using the search space. In the activation/de-activation control signal for each UE, an identifier of a UE that is separately configured or a UE identifier of higher layer is set, and the UE identifies a control signal addressed thereto by using the identifier. In addition, an identifier used for giving a notification of an ACK/NACK feedback resource in L1/L2 signaling may be assigned to the activation/de-activation control signal for each UE. Furthermore, by using beam forming of the eNB, the activation/de-activation control signal may be transmitted to be selectively received by a specific UE.

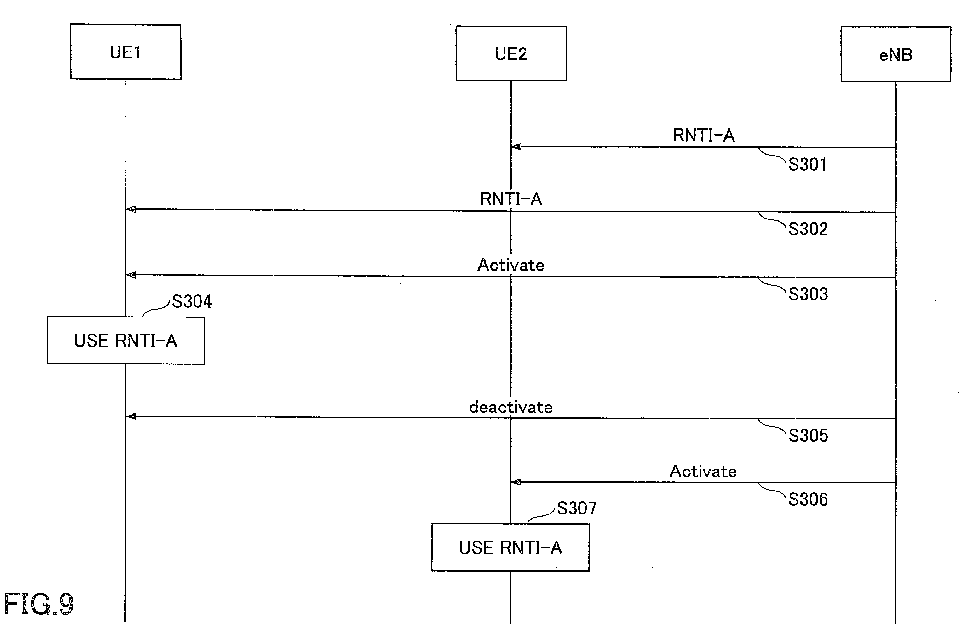

An example of the sequence is illustrated in Fig. 9. In this example, UE 1 and UE 2 are present. First, in the random access procedure and the like performed by the the UE 1 and UE 2, in Step S301, the eNB assigns an RNTI-A to the UE 2 and, in Step S302, allocates the RNTI-A that is the same as that assigned to the UE 2 is assigned to the UE 1.

Here, in Step S303, the eNB transmits a control signal instructing activation to the UE 1, and, when this is received by the UE 1, thereafter, the UE 1 performs DCI monitoring using the RNTI-A (Step S304). In this period, the eNB does not transmit a control signal instructing activation to the UE 2, and the UE 2 does not perform DCI monitoring using the RNTI-A.

In Step S305, when a control signal directing deactivation is received from the eNB, the UE 1 stops the DCI monitoring. Meanwhile, in Step S306, the eNB transmits a control signal directing activation to the UE 2, and, when the control signal is received by the UE 2, thereafter, the UE 2 performs DCI monitoring using the RNTI-A (Step S307).

### (Device Configuration)

Next, an example of the configurations of the UE and the eNB according to an embodiment of the invention will be described.

### <User Equipment UE>

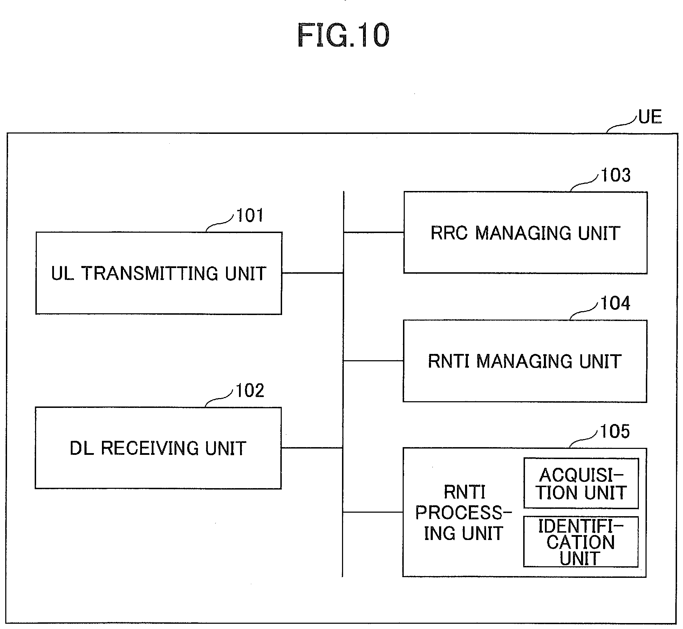

Fig. 10 illustrates a diagram that illustrates the functional configuration of the UE. As illustrated in Fig. 10, the UE includes: an UL transmitting unit 101; a DL receiving unit 102; an RRC managing unit 103; an RNTI managing unit 104; and an RNTI processing unit 105. In addition, Fig. 10 illustrates only functional units of the UE that particularly relate to the invention, and the UE also has at least a function used for performing an operation that is compliant with LTE not illustrated in the drawing.

The UL transmitting unit 101 includes a function for generating various signals of a physical layer from information of higher layer that are to be transmitted from the UE and transmitting the signals to the eNB. The DL receiving unit 102 includes a function for receiving various downlink signals from the eNB and acquiring the information of the higher layer from the received signals of the physical layer. The UL transmitting unit 101 and the DL receiving unit 102 includes a function for performing the random access procedure.

The RRC managing unit 103 acquires a broadcast signal, a higher layer signal, and the like from the eNB through the DL receiving unit 102, acquires configuration information and the like from such signals, and stores the information. In addition, the RRC managing unit 103 has an operation control function that is based on the activation/deactivation signal described in the modified example. Furthermore, the RRC managing unit 103 includes a function for the management and the notification of the UE capability information.

The RNTI managing unit 104 receives output of an RNTI from the eNB and stores the issued RNTI. In addition, the RNTI managing unit 104 includes a function for generating an RNTI from the UE-ID and storing the generated RNTI.

In addition, the RNTI processing unit 105 performs a process relating to the RNTI described in this embodiment such as monitoring of DCI using the RNTI, identification of a channel addressed thereto, and the like. In other words, the RNTI processing unit 105 includes: an acquisition unit that acquires downlink control information from a downlink control channel by using a part of an identifier used for identifying a channel and acquiring a remaining part of the identifier except for the part from a predetermined resource received from the base station; and an identification unit that identifies a channel by using the identifier configured by the part acquired by the acquisition unit and the remaining part described above.

The whole configuration of the UE illustrated in Fig. 10 may be realized by a hardware circuit (for example, one or a plurality of IC chips), or it may be configured such that a part thereof is configured by a hardware circuit, and the other parts are realized by a CPU and a program.

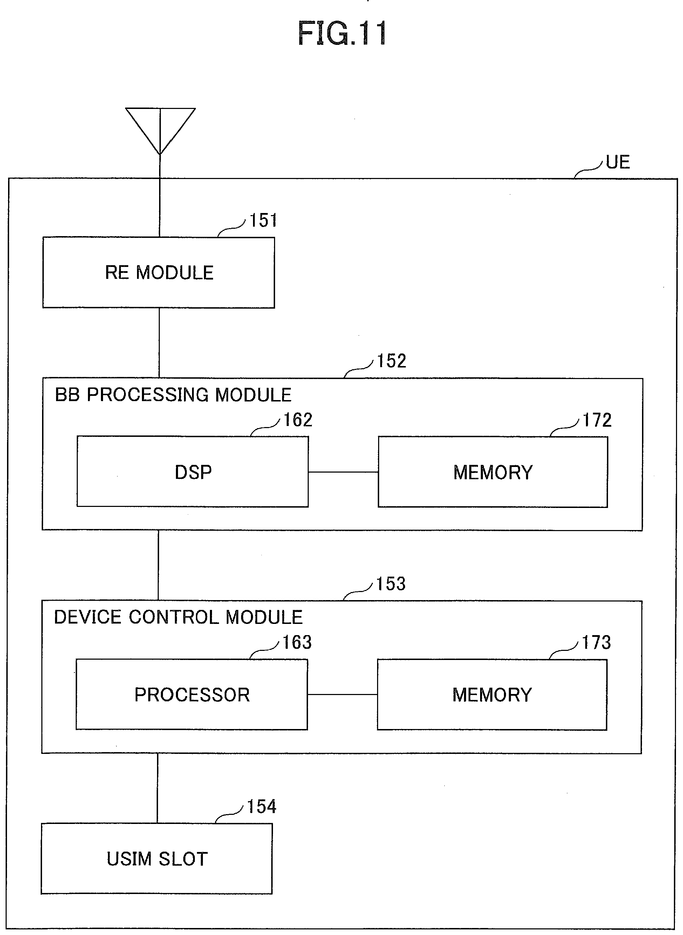

Fig. 11 is a diagram that illustrates an example of the hardware (HW) configuration of the UE. Fig. 11 illustrates a configuration that is closer to an implementing example than that illustrated in Fig. 10. As illustrated in Fig. 11, the UE includes: a radio equipment (RE) module 151 that performs a process relating to a radio signal; a base band (BB) processing module 152 that performs baseband signal processing; a device control module 153 that performs a process of the higher layer and the like; and a USIM slot 154 that is an interface accessing a USIM card.

The RE module 151 performs digital-to-analog (D/A) conversion, modulation, frequency conversion, power amplification, and the like for a digital baseband signal received from the BB processing module 152, thereby generating a radio signal to be transmitted from an antenna. In addition, the RE module 151 generates a digital baseband signal by performing frequency conversion, analog-to-digital (A/D) conversion, demodulation, and the like for a radio signal received from the antenna and transmits the generated baseband signal to the BB processing module 152. The RE module 151, for example, incudes the functions of the physical layer and the like of the UL transmitting unit 101 and the DL receiving unit 102 illustrated in Fig. 10.

The BB processing module 152 performs a process for performing a conversion between an IP packet and a digital baseband signal. A digital signal processor (DSP) 162 is a processor that performs signal processing in the BB processing module 152. A memory 172 is used as a work area of the DSP 162. The BB processing module 152, for example, includes the functions of the layer 2 and the like of the UL transmitting unit 101 and the DL receiving unit 102 illustrated in Fig. 10 and the functions of the RRC managing unit 103, the RNTI managing unit 104, and the RNTI processing unit 105. In addition, all or some of the functions of the RRC managing unit 103, the RNTI managing unit 104, and the RNTI processing unit 105 may be included in the device control module 153.

The device control module 153 performs a protocol process of an IP layer, processes of various applications, and the like. A processor 163 is a processor that performs a process performed by the device control module 153. The memory 173 is used as a work area of the processor 163. In addition, the processor 163 performs data reading/writing from/into the USIM through the USIM slot 154.

### <Base Station eNB>

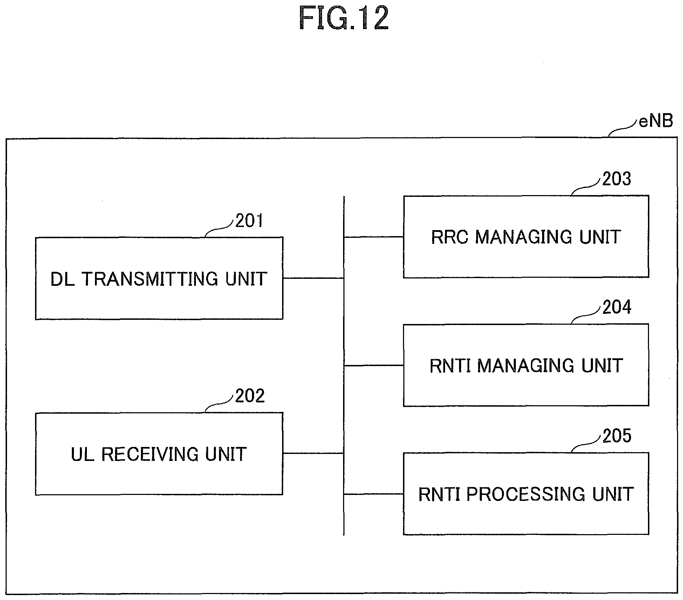

Fig. 12 illustrates a diagram that illustrates the functional configuration of the eNB. As illustrated in Fig. 12, the eNB includes: a DL transmitting unit 201; an UL receiving unit 202; an RRC managing unit 203; an RNTI managing unit 204; and an RNTI processing unit 205. Fig. 12 illustrates only functional units of the eNB that particularly relate to an embodiment of the invention, and the eNB also has at least a function used for performing an operation that is compliant with the LTE system not illustrated in the drawing.

The DL transmitting unit 201 includes a function for generating various signals of a physical layer from information of a higher layer that are to be transmitted from the eNB and transmitting the signals. The UL receiving unit 202 includes a function for receiving various uplink signals from the UE and acquiring information of a higher layer from the received signals of the physical layer. The DL transmitting unit 201 and the UL receiving unit 202 include a function for performing beam forming.

The RRC managing unit 203 has a function for generating a broadcast signal including configuration information, a higher layer signal, and the like and transmitting the signals to the UE through the DL transmitting unit 201. In addition, the RRC managing unit 203 has functions for generation of the activation/deactivation control signal and transmission control described in the modified example.

The RNTI managing unit 204 issues an RNTI to the UE and stores the issued RNTI. In addition, the RNTI managing unit 204 includes a function for generating an RNTI from the UE-ID and storing the generated RNTI. Furthermore, the RNTI processing unit 205 includes a function for performing CRC masking of the DCI by using the RNTI, a function for giving a notification of the remaining part (including the expansion identifier) of the RNTI using another resource and the like through the DL transmitting unit 201.

The whole configuration of the eNB illustrated in Fig. 12 may be realized by a hardware circuit (for example, one or a plurality of IC chips), or it may be configured such that a part thereof is configured by a hardware circuit, and the other parts are realized by a CPU and a program.

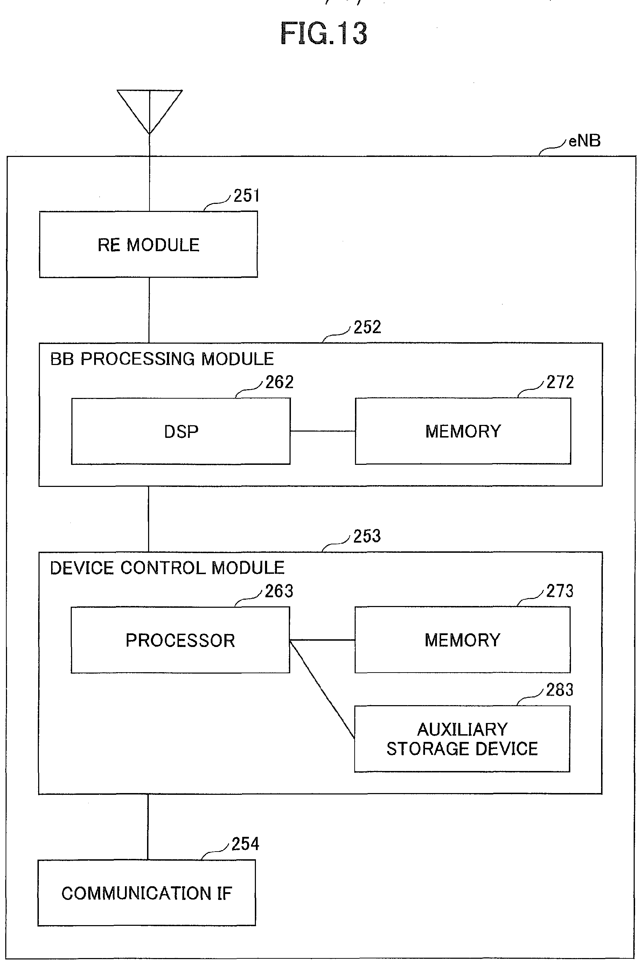

Fig. 13 is a diagram that illustrates an example of the hardware (HW) configuration of the eNB. Fig. 13 illustrates a configuration that is closer to an implementing example than that illustrated in Fig. 12. As illustrated in Fig. 13, the eNB includes: an RE module 251 that performs a process relating to a radio signal; a BB processing module 252 that performs baseband signal processing; a device control module 253 that performs a process of the higher layer and the like; and a communication IF 254 that is an interface for a connection with a network.

The RE module 251 performs D/A conversion, modulation, frequency conversion, power amplification, and the like for a digital baseband signal received from the BB processing module 252, thereby generating a radio signal to be transmitted from an antenna. In addition, the RE module 251 generates a digital baseband signal by performing frequency conversion, A/D conversion, demodulation, and the like for a radio signal received from the antenna and transmits the generated baseband signal to the BB processing module 252. The RE module 251, for example, incudes the functions of the physical layer and the like of the DL transmitting unit 201 and the UL receiving unit 202 illustrated in Fig. 12.

The BB processing module 252 performs a process for performing a conversion between an IP packet and a digital baseband signal. A DSP 262 is a processor that performs signal processing in the BB processing module 252. A memory 272 is used as a work area of the DSP 252. The BB processing module 252, for example, includes the functions of the layer 2 and the like of the DL transmitting unit 201 and the UL receiving unit 202 illustrated in Fig. 12 and includes the RRC managing unit 203, the RNTI managing unit 204, and the RNTI processing unit 205. In addition, all or some of the functions of the RRC managing unit 203, the RNTI managing unit 204, and the RNTI processing unit 205 may be included in the device control module 253.

The device control module 253 performs a protocol process of an IP layer, an OAM process, and the like. A processor 263 is a processor that performs a process performed by the device control module 253. The memory 273 is used as a work area of the processor 263. In an auxiliary storage device 283, for example, is a HDD or the like, and various setting information and the like for operating the own base station eNB are stored therein.

The functions (functional parts) of the devices illustrated in Figs. 10 to 13 are merely an example of the configurations realizing the process described in this embodiment. As long as the process described in this embodiment can be realized, the implementing method (the specific arrangement of the functional units, the names, and the like) is not limited to a specific implementing method.

### (Summary of Embodiment)

As described above, according to the disclosed technology, there is provided a user equipment that communicates with a base station in a radio communication system including the base station and the user equipment which includes: an acquisition unit that acquires downlink control information from a downlink control channel by using a part of an identifier used for identifying a channel and acquires a remaining part acquired by excluding the part from the identifier from a predetermined resource; and an identification unit that identifies the channel by using the identifier configured by the part and the remaining part acquired by the acquisition unit.

According to the configuration described above, in a radio communication system, even in a case where an identifier used for identifying a channel is expanded, an increase in the overhead can be suppressed.

The predetermined resource is a field of the downlink control information, a transmission resource of the downlink control channel, a transmission resource of a reference signal used for demodulating the downlink control channel, numerology used for communication between the base station and the user equipment, or a resource pool identifier. By using such resources, the remaining part can be transmitted with no overhead or a small overhead.

The user equipment described above may further include: a receiving unit that receives a second identifier shorter than the identifier from the base station in a random access sequence performed between the base station and the user equipment; and a transmitting unit that transmits capability information of the user equipment to the base station after the random access sequence, wherein the receiving unit may receive the identifier output from the base station in accordance with the capability information. According to such a configuration, only some user equipments can use an expanded identifier based on the capability information (a capability, a type, and the like) of the user equipment. Accordingly, an increase in the overhead can be suppressed.

The user equipment described above may further include: a receiving unit that receives a second identifier shorter than the identifier from the base station in a random access sequence performed between the base station and the user equipment; and a transmitting unit that transmits capability information of the user equipment to the base station after the random access sequence, wherein the receiving unit receives an expanded identifier output from the base station in accordance with the capability information, and the second identifier and the expanded identifier may be used as the identifier. Also according to such a configuration, only some user equipments can use an expanded identifier based on the capability information (a capability, a type, and the like) of the user equipment. Accordingly, an increase in the overhead can be suppressed.

The user equipment described above may further include: a transmitting unit that transmits a random access signal to the base station by using a resource configuration corresponding to a capability of the user equipment in a random access sequence performed between the base station and the user equipment; and a receiving unit that receives the identifier output in correspondence with the resource configuration from the base station receiving the random access signal. Also according to such a configuration, only some user equipments can use an expanded identifier based on the capability information (a capability, a type, and the like) of the user equipment. Accordingly, an increase in the overhead can be suppressed.

The acquisition unit may use an identifier generated from identification information of the user equipment as the identifier. According to such a configuration, an overhead relating to the issuing of the identifier can be decreased.

The acquisition unit may acquire the downlink control information by monitoring a search space corresponding to the identifier or a format of the downlink control information corresponding to the identifier. According to such a configuration, the downlink control information can be efficiently acquired.

In addition, according to the disclosed technology, there is provided a base station communicating with a user equipment in a radio communication system including the base station and the user equipment which includes: an identifier processing unit that masks a value for a test of downlink control information by using a part of an identifier used for identifying a channel; and a transmitting unit that transmits the downlink control information to which the masked value for the test is added in a downlink control channel, wherein the transmitting unit transmits a remaining part acquired by excluding the part from the identifier by a predetermined resource.

According to the configuration described above, in a radio communication system, even in a case where an identifier used for identifying a channel is expanded, an increase in the overhead can be suppressed.

As above, while the embodiment of the invention has been described, the disclosed invention is not limited to such an embodiment, and various modified examples, corrective examples, alternative examples, substitutive examples, and the like can be understood by a person skilled in the art. While the description has been presenting using specific numeric examples for easy understanding of the invention, unless otherwise mentioned, such numerics are merely an example, and any other proper values may be used. In the description presented above, divisions of items are not essential to the invention, and matters described in two or more items may be combined as is necessary, and a matter described in an item may be applied to the matter of another item (as long as there is no contradiction). In the functional block diagram, a boundary between the functional units or the processing units does not necessarily correspond to a boundary of physical components. The operations of a plurality of functional units may be performed by a physical one component, or the operation of one functional unit may be performed by a plurality of physical components. For the convenience of the description, while the base station eNB and the user equipment UE have been described using the functional block diagrams, such devices may be realized by hardware, software, or a combination thereof. Software operated by the processors included in the user equipment UE and the base station eNB may be stored in a random access memory (RAM), a flash memory, a read only memory (ROM), an EPROM, an EEPROM, a register, a hard disk (HDD), a removable disk, a CD-ROM, a database, a server, or any other appropriate storage medium.

### <Supplement of Embodiment>

A notification of information is not limited to the aspect or embodiment described in this specification and may be given by any other method. For example, the notification of information may be given by physical layer signaling (for example, downlink control information (DCI) or uplink control information (UCI)), higher layer signaling (for example, RRC signaling, MAC signaling, broadcast information (master information block (MIB), system information block (SIB))), other signals, or a combination thereof. Further, the RRC message may be referred to as "RRC signaling." Further, the RRC message may be, for example, an RRC connection setup message, an RRC connection reconfiguration message, or the like.

Each aspect and embodiment of the present invention may be applied to LTE, LTE-A, SUPER 3G, IMT-advanced, 4G, 5G, Future Radio Access (FRA), W-CDMA (registered trademark), GSM (registered trademark), CDMA 2000, Ultra Mobile Broadband (UMB), IEEE 802.11 (Wi-Fi), IEEE 802.16 (WiMAX), IEEE 802.20, Ultra-WideBand (UWB), Bluetooth (registered trademark), a system using any other appropriate system, and/or next generation systems extended on the basis of these standards.

The judgement or determination may be performed in accordance with a value (0 or 1) indicated by one bit, may be performed in accordance with a Boolean value (true or false), or may be performed by a comparison of numerical values (for example, a comparison with a predetermined value).

The terms described in this specification and/or terms necessary for understanding this specification may be replaced with terms having the same or similar meanings. For example, a channel and/or a symbol may be a signal. Further, a signal may be a message.

The mobile station UE may be a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, it may also be referred to as a remote terminal, handset, user agent, mobile client, client, or some other suitable term.

Each aspect/embodiment described in this specification may be used alone, in combination, or may be switched in accordance with the execution. Further, notification of predetermined information (for example, notification of "being X") is not limited to being performed explicitly, but is performed by implicitly (for example, not notifying the predetermined information).

The terms "determining" and "deciding" used in this specification may include a wide variety of actions. For example, "determining" and "deciding" may include, for example, events in which events such as calculating, calculating, computing, processing, deriving, investigating, looking up (for example, looking up in a table, a database, or another data structure), or ascertaining are regarded as "determining" or "deciding." Further, "determining" and "deciding" may include, for example, events in which events such as receiving (for example, receiving information), transmitting (for example, transmitting information), input, output, or accessing (for example, accessing data in a memory) are regarded as "determining" or "deciding." Further, "determining" and "deciding" may include, for example, events in which events such as resolving, selecting, choosing, establishing, or comparing are regarded as "determining" or "deciding." In other words, "determining" and "deciding" may include events in which a certain operation is regarded as "determining" or "deciding."

A phrase "on the basis of" used in this specification is not limited to "on the basis of only" unless otherwise stated. In other words, a phrase "on the basis of" means both "on the basis of only" and "on the basis of at least."

The processing procedures, the sequences, and the like of the respective aspects/embodiments described in this specification may be reversed in order unless there is a contradiction. For example, the method described in this specification presents elements of various steps in an exemplary order and is not limited to a presented specific order.

Input and output information and the like may be stored in a specific place (for example, a memory) or may be managed through a management table. Input and output information and the like may be overwritten, updated, or additionally written. Output information and the like may be deleted. Input information and the like may be transmitted to another device.

Notification of predetermined information (for example, notification of "being X") is not limited to explicit notification, but it may be performed implicitly (for example, not performing notification of the predetermined information).

Information, signals, and the like described in this specification may be indicated using any one of a variety of different techniques. For example, data, instructions, commands, information, signals, bits, symbols, chips, and the like which are mentioned throughout the above description may be indicated by voltages, currents, electromagnetic waves, magnetic particles, optical fields or photons, or an arbitrary combination thereof.

### EXPLANATIONS OF LETTERS OR NUMERALS

- 101: UL transmitting unit
- 102: DL receiving unit
- 103: RRC managing unit
- 104: RNTI managing unit
- 105: RNTI processing unit
- 152: BB processing module
- 153: Device control module
- 154: USIM slot
- 201: DL transmitting unit
- 202: UL receiving unit
- 203: RRC managing unit
- 204: RNTI managing unit
- 205: RNTI processing unit
- 251: RE module
- 252: BB processing module
- 253: Device control module
- 254: Communication IF

## Claims

1. A user equipment that is configured to communicate with a base station in a radio communication system including the base station and the user equipment, the user equipment comprising:
an acquisition unit that is configured to acquire downlink control information from a downlink control channel by using a part of an identifier used for identifying a channel and to acquire a remaining part of the identifier from a predetermined resource; and
an identification unit that is configured to identify the channel by using the identifier configured by the part and the remaining part acquired by the acquisition unit.

2. The user equipment according to claim 1, wherein the predetermined resource is a field of the downlink control information, a transmission resource of the downlink control channel, a transmission resource of a reference signal used for demodulating the downlink control channel, numerology used for communication between the base station and the user equipment, or a resource pool identifier.

3. The user equipment according to claim 1 or 2, further comprising:
a receiving unit that is configured to receive a second identifier shorter than the identifier from the base station in a random access procedure performed between the base station and the user equipment; and
a transmitting unit that is configured to transmit capability-information of the user equipment to the base station after the random access procedure,
wherein the receiving unit is configured to receive the identifier output from the base station in accordance with the capability information.

4. The user equipment according to claim 1 or 2, further comprising:
a receiving unit that is configured to receive a second identifier shorter than the identifier from the base station in a random access procedure performed between the base station and the user equipment; and
a transmitting unit that is configured to transmit capability information of the user equipment to the base station after the random access procedure,
wherein the receiving unit is configured to receive an expanded identifier output from the base station in accordance with the capability information, and the identification unit is configured to use the second identifier and the expanded identifier as the identifier.

5. The user equipment according to claim 1 or 2, further comprising:
a transmitting unit that is configured to transmit a random access signal to the base station by using a resource configuration corresponding to a capability of the user equipment in a random access procedure performed between the base station and the user equipment; and
a receiving unit that is configured to receive the identifier output in correspondence with the resource configuration from the base station receiving the random access signal.

6. The user equipment according to claim 1 or 2, wherein the acquisition unit is configured to use an identifier generated from identification information of the user equipment as the identifier.

7. The user equipment according to any one of claims 1 to 6, wherein the acquisition unit is configured to acquire the downlink control information by monitoring a search space corresponding to the identifier or a format of the downlink control information corresponding to the identifier.

8. A base station configured to communicate with a user equipment in a radio communication system including the base station and the user equipment, the base station comprising:
an identifier processing unit that is configured to mask a value for a test of downlink control information by using a part of an identifier used for identifying a channel; and
a transmitting unit that is configured to transmit the downlink control information to which the masked value for the test is added in a downlink control channel,
wherein the transmitting unit is configured to transmit a remaining part of the identifier by a predetermined resource.

9. A channel identifying method performed by a user equipment that communicates with a base station in a radio communication system including the base station and the user equipment, the channel identifying method comprising:
acquiring downlink control information from a downlink control channel by using a part of an identifier used for identifying a channel and acquires a remaining part of the identifier from a predetermined resource; and
identifying the channel by using the identifier configured by the part and the remaining part acquired in the acquiring of downlink control information.

10. An identifier transmitting method performed by a base station communicating with a user equipment in a radio communication system including the base station and the user equipment, the identifier transmitting method comprising:
masking a value for a test of downlink control information by using a part of an identifier used for identifying a channel;
transmitting the downlink control information to which the masked value for the test is added in a downlink control channel; and
transmitting a remaining part of the identifier by a predetermined resource.

## Patentansprüche

1. Benutzerendgerät, das dazu konfiguriert ist, mit einer Basisstation in einem Funkkommunikationssystem zu kommunizieren, welches die Basisstation und das Benutzerendgerät einschließt, wobei das Benutzerendgerät umfasst:
eine Erfassungseinheit, die dazu konfiguriert ist, Downlink-Steuerinformationen von einem Downlink-Steuerkanal unter Verwendung eines Teils eines Identifikationsmerkmals zu erfassen, das zum Identifizieren eines Kanals verwendet wird, und einen Restteil des Identifikationsmerkmals von einer vorbestimmten Ressource zu erfassen; und
eine Identifikationseinheit, die dazu konfiguriert ist, den Kanal unter Verwendung des Identifikationsmerkmals, das anhand des Teils und des von der Erfassungseinheit erfassten Restteils konfiguriert wird, zu identifizieren.

2. Benutzerendgerät nach Anspruch 1, wobei es sich bei der vorbestimmten Ressource um ein Feld der Downlink-Steuerinformationen, eine Übertragungsressource des Downlink-Steuerkanals, eine Übertragungsressource eines Referenzsignals, das zum Demodulieren des Downlink-Steuerkanals verwendet wird, Numerologie, die zur Kommunikation zwischen der Basisstation und dem Benutzerendgerät verwendet wird, oder ein Ressourcenpool-Identifikationsmerkmal handelt.

3. Benutzerendgerät nach Anspruch 1 oder 2, weiter umfassend:
eine Empfangseinheit, die dazu konfiguriert ist, von der Basisstation in einem Direktzugriffsvorgang, der zwischen der Basisstation und dem Benutzerendgerät durchgeführt wird, ein zweites Identifikationsmerkmal zu empfangen, welches kürzer ist als das Identifikationsmerkmal; und
eine Übertragungseinheit, die dazu konfiguriert ist, nach dem Direktzugriffsvorgang Fähigkeitsinformationen des Benutzerendgeräts an die Basisstation zu übertragen,
wobei die Empfangseinheit dazu konfiguriert ist, das Identifikationsmerkmal, das von der Basisstation entsprechend den Fähigkeitsinformationen ausgegeben wird, zu empfangen.

4. Benutzerendgerät nach Anspruch 1 oder 2, weiter umfassend:
eine Empfangseinheit, die dazu konfiguriert ist, von der Basisstation in einem Direktzugriffsvorgang, der zwischen der Basisstation und dem Benutzerendgerät durchgeführt wird, ein zweites Identifikationsmerkmal zu empfangen, welches kürzer ist als das Identifikationsmerkmal; und
eine Übertragungseinheit, die dazu konfiguriert ist, nach dem Direktzugriffsvorgang Fähigkeitsinformationen des Benutzerendgeräts an die Basisstation zu übertragen,
wobei die Empfangseinheit dazu konfiguriert ist, ein erweitertes Identifikationsmerkmal zu empfangen, das von der Basisstation entsprechend den Fähigkeitsinformationen ausgegeben wird, und die Identifikationseinheit dazu konfiguriert ist, das zweite Identifikationsmerkmal und das erweiterte Identifikationsmerkmal als das Identifikationsmerkmal zu verwenden.

5. Benutzerendgerät nach Anspruch 1 oder 2, weiter umfassend:
eine Übertragungseinheit, die dazu konfiguriert ist, in einem Direktzugriffsvorgang, der zwischen der Basisstation und dem Benutzerendgerät durchgeführt wird, unter Verwendung einer Ressourcenkonfiguration, die einer Fähigkeit des Benutzerendgeräts entspricht, ein Direktzugriffssignal an die Basisstation zu übertragen; und
eine Empfangseinheit, die dazu konfiguriert ist, das Identifikationsmerkmal zu empfangen, das von der das Direktzugriffssignal empfangenden Basisstation in Entsprechung mit der Ressourcenkonfiguration ausgegeben wird.

6. Benutzerendgerät nach Anspruch 1 oder 2, wobei die Erfassungseinheit dazu konfiguriert ist, ein anhand von Identifikationsinformationen des Benutzerendgeräts erzeugtes Identifikationsmerkmal als Identifikationsmerkmal zu verwenden.

7. Benutzerendgerät nach einem der Ansprüche 1 bis 6, wobei die Erfassungseinheit dazu konfiguriert ist, die Downlink-Steuerinformationen durch Überwachen eines Suchraums, der dem Identifikationsmerkmal entspricht, oder eines Formats der Downlink-Steuerinformationen, das dem Identifikationsmerkmal entspricht, zu erfassen.

8. Basisstation, die dazu konfiguriert ist, mit einem Benutzerendgerät in einem Funkkommunikationssystem zu kommunizieren, welches die Basisstation und das Benutzerendgerät einschließt, wobei die Basisstation umfasst:
eine Identifikationsmerkmalverarbeitungseinheit, die dazu konfiguriert ist, einen Wert für einen Test von Downlink-Steuerinformationen unter Verwendung eines Teils eines Identifikationsmerkmals, das zum Identifizieren eines Kanals verwendet wird, zu maskieren; und
eine Übertragungseinheit, die dazu konfiguriert ist, die Downlink-Steuerinformationen, denen der maskierte Wert für den Test hinzugefügt wird, in einem Downlink-Steuerkanal zu übertragen,
wobei die Übertragungseinheit dazu konfiguriert ist, einen Restteil des Identifikationsmerkmals über eine vorbestimmte Ressource zu übertragen.

9. Kanalidentifikationsverfahren, das von einem Benutzerendgerät durchgeführt wird, das mit einer Basisstation in einem Funkkommunikationssystem kommuniziert, welches die Basisstation und das Benutzerendgerät einschließt, wobei das Kanalidentifikationsverfahren umfasst:
Erfassen von Downlink-Steuerinformationen von einem Downlink-Steuerkanal unter Verwendung eines Teils eines Identifikationsmerkmals, das zum Identifizieren eines Kanals verwendet wird, und einen Restteil des Identifikationsmerkmals von einer vorbestimmten Ressource erfasst; und
Identifizieren des Kanals unter Verwendung des Identifikationsmerkmals, das anhand des Teils und des beim Erfassen von Downlink-Steuerinformationen erfassten Restteils konfiguriert wurde.

10. Identifikationsmerkmalübertragungsverfahren, das von einer Basisstation durchgeführt wird, die mit einem Benutzerendgerät in einem Funkkommunikationssystem kommuniziert, welches die Basisstation und das Benutzerendgerät einschließt, wobei das Identifikationsmerkmalübertragungsverfahren umfasst:
Maskieren eines Werts für einen Test von Downlink-Steuerinformationen unter Verwendung eines Teils eines Identifikationsmerkmals, das zum Identifizieren eines Kanals verwendet wird;
Übertragen der Downlink-Steuerinformationen, denen der maskierte Wert für den Text hinzugefügt wurde, in einem Downlink-Steuerkanal; und
Übertragen eines Restteils des Identifikationsmerkmals über eine vorbestimmte Ressource.

## Revendications

1. Équipement utilisateur qui est configuré pour communiquer avec une station de base dans un système de communication radio incluant la station de base et l'équipement utilisateur, l'équipement utilisateur comprenant :
une unité d'acquisition qui est configurée pour acquérir des informations de commande en liaison descendante à partir d'un canal de commande en liaison descendante en utilisant une partie d'un identificateur utilisé pour l'identification d'un canal et pour acquérir une partie restante de l'identificateur à partir d'une ressource prédéterminée ; et
une unité d'identification qui est configurée pour identifier le canal en utilisant l'identificateur configuré par la partie et la partie restante acquise par l'unité d'acquisition.

2. Équipement utilisateur selon la revendication 1, dans lequel la ressource prédéterminée est un champ des informations de commande en liaison descendante, une ressource de transmission du canal de commande en liaison descendante, une ressource de transmission d'un signal de référence utilisé pour la démodulation du canal de commande en liaison descendante, une numérologie utilisée pour la communication entre la station de base et l'équipement utilisateur ou un identificateur d'ensemble de ressources.

3. Équipement utilisateur selon la revendication 1 ou 2, comprenant en outre :
une unité de réception qui est configurée pour recevoir un second identificateur plus court que l'identificateur à partir de la station de base dans une procédure d'accès aléatoire effectuée entre la station de base et l'équipement utilisateur ; et
une unité de transmission qui est configurée pour transmettre des informations de capacité de l'équipement utilisateur à la station de base après la procédure d'accès aléatoire,
dans lequel l'unité de réception est configurée pour recevoir l'identificateur délivré en sortie à partir de la station de base conformément aux informations de capacité.

4. Équipement utilisateur selon la revendication 1 ou 2, comprenant en outre :
une unité de réception qui est configurée pour recevoir un second identificateur plus court que l'identificateur à partir de la station de base dans une procédure d'accès aléatoire effectuée entre la station de base et l'équipement utilisateur ; et
une unité de transmission qui est configurée pour transmettre des informations de capacité de l'équipement utilisateur à la station de base après la procédure d'accès aléatoire,
dans lequel l'unité de réception est configurée pour recevoir un identificateur étendu délivré en sortie à partir de la station de base conformément aux informations de capacité et l'unité d'identification est configurée pour utiliser le second identificateur et l'identificateur étendu comme l'identificateur.

5. Équipement utilisateur selon la revendication 1 ou 2, comprenant en outre :
une unité de transmission qui est configurée pour transmettre un signal d'accès aléatoire à la station de base en utilisant une configuration de ressource correspondant à une capacité de l'équipement utilisateur dans une procédure d'accès aléatoire entre la station de base et l'équipement utilisateur ; et
une unité de réception qui est configurée pour recevoir l'identificateur délivré en sortie en correspondance avec la configuration de ressource à partir de la station de base recevant le signal d'accès aléatoire.

6. Équipement utilisateur selon la revendication 1 ou 2, dans lequel l'unité d'acquisition est configurée pour utiliser un identificateur généré à partir des informations d'identification de l'équipement utilisateur comme l'identificateur.

7. Équipement utilisateur selon l'une quelconque des revendications 1 à 6, dans lequel l'unité d'acquisition est configurée pour acquérir les informations de commande en liaison descendante en surveillant un espace de recherche correspondant à l'identificateur ou un format des informations de commande en liaison descendante correspondant à l'identificateur.

8. Station de base configurée pour communiquer avec un équipement utilisateur dans un système de communication radio incluant la station de base et l'équipement utilisateur, la station de base comprenant :
une unité de traitement d'identificateur qui est configurée pour masquer une valeur pour un test d'informations de commande en liaison descendante en utilisant une partie d'un identificateur utilisé pour l'identification d'un canal ; et
une unité de transmission qui est configurée pour transmettre les informations de commande en liaison descendante auxquelles la valeur masquée pour le test est ajoutée dans un canal de commande en liaison descendante,
dans laquelle l'unité de transmission est configurée pour transmettre une partie restante de l'identificateur par une ressource prédéterminée.

9. Procédé d'identification de canal effectué par un équipement utilisateur qui communique avec une station de base dans un système de communication radio incluant la station de base et l'équipement utilisateur, le procédé d'identification de canal comprenant :
l'acquisition d'informations de commande en liaison descendante à partir d'un canal de commande en liaison descendante en utilisant une partie d'un identificateur utilisé pour l'identification d'un canal et acquiert une partie restante de l'identificateur à partir d'une ressource prédéterminée ; et
l'identification du canal en utilisant l'identificateur configuré par la partie et la partie restante acquise dans l'acquisition d'informations de commande en liaison descendante.

10. Procédé de transmission d'identificateur effectué par une station de base communiquant avec un équipement utilisateur dans un système de communication radio incluant la station de base et l'équipement utilisateur, le procédé de transmission d'identificateur comprenant :
le masquage d'une valeur pour un test d'informations de commande en liaison descendante en utilisant une partie d'un identificateur utilisé pour l'identification d'un canal ;
la transmission des informations de commande en liaison descendante auxquelles la valeur masquée pour le test est ajoutée dans un canal de commande en liaison descendante ; et
la transmission d'une partie restante de l'identificateur par une ressource prédéterminée.
